(19)

Europäisches
Patentamt
European
Patent Office
Office européen
des brevets

(11)  **EP 4 549 625 A1**

(12)  **EUROPEAN PATENT APPLICATION**

(43) Date of publication:
07.05.2025  Bulletin 2025/19

(21) Application number: 23207017.7

(22) Date of filing: 31.10.2023

(51) International Patent Classification (IPC):
*C25B 11/031* (2021.01)  *C25B 11/037* (2021.01)
*C25B 11/061* (2021.01)  *C25B 11/067* (2021.01)
*C25B 11/077* (2021.01)  *C25B 11/095* (2021.01)
*H01M 4/04* (2006.01)  *H01M 4/62* (2006.01)
*H01M 4/86* (2006.01)  *H01M 4/88* (2006.01)
*C25B 1/04* (2021.01)

(52) Cooperative Patent Classification (CPC):
C25B 1/04; C25B 11/032; C25B 11/037;
C25B 11/061; C25B 11/067; C25B 11/077;
C25B 11/095; H01M 4/0419; H01M 4/0471;
H01M 4/622; H01M 4/8605; H01M 4/8828;
H01M 2004/021

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: VITO NV
2400 Mol (BE)

(72) Inventors:
• GLUKHAREV, Artem
2400 Mol (BE)

• CHEN, Zhiyuan
2400 Mol (BE)
• TSEHAYE, Misgina Tilahun
2400 Mol (BE)
• NAHRA, Fady
2400 Mol (BE)
• VAES, Jan
2400 Mol (BE)

(74) Representative: Arnold & Siedsma
Bezuidenhoutseweg 57
2594 AC The Hague (NL)

(54)  **METHOD FOR PRODUCING A POROUS STRUCTURE WITH EMBEDDED PARTICLES AND RELATED METHODS**

(57)  The method involves producing a porous structure by mixing polymerisable monomers with particles of electrochemically active metals or compounds. The mixture is heated to a polymerisation temperature to form a solid green body with embedded particles. This phase is then heated to a sintering temperature to cause sintering of the particles. The polymerisable monomer is chosen such that the solid green body has a decomposition temperature smaller than or equal to the sintering temperature of the metals or compounds. The particles can have a size between 5 nm and 100 micron, and may include nano particles with a size between 10 nm and 50 micron. The method can also involve mixing 20-80 wt.% of metals or metal oxides with 20-80 wt.% of polymerisable monomer. The resulting electrode can have a thickness of at least 30 micron and a porosity of between 30 and 90%.

Fig. 1

**Description**

TECHNICAL FIELD

The invention pertains to a method for producing a porous electrode, using a polymerisable monomer and particles of one or more electrochemically active metals or metal compounds.

BACKGROUND DESCRIPTION

In the field of materials science, particularly in the production of self-supporting or self-standing electrodes, numerous challenges have to be overcome. Porous electrodes are widely used in various applications due to their unique properties such as high surface area, low density, and the ability to facilitate fluid or gas flow. These electrodes are often used in electrochemical energy storage devices and in sensors.

However, the production of such porous electrodes often involves complex processes and requires precise control over the properties of the final product. For instance, the pore size, porosity, and mechanical strength of the structure are critical parameters that need to be carefully controlled to ensure the electrode's performance in its intended application.

Moreover, the materials used in the production of these electrodes also play a significant role in determining their properties. Metals and metal compounds are often used due to their electrochemical activity, which is beneficial in applications such as energy storage and sensors. However, the choice of metal or metal compound, as well as their particle size, can significantly affect the properties of the final product.

Furthermore, the use of polymers in the production of porous structures is also common. Polymers can provide additional properties to the structure, such as flexibility and chemical resistance. However, the choice of polymer and its polymerisation conditions can also significantly affect the properties of the final product.

An approach to produce hydrogen gas is from water using renewable energy sources, which has become of particular interest and is considered to be the most promising technique because it emits only water and oxygen as byproducts, without $CO_2$ emissions. The hydrogen produced in this way is called green hydrogen since water is just splitting into oxygen and hydrogen under the influence of electricity. In alkaline water electrolysis, in which aqueous KOH or NaOH is used as electrolyte, water is first reduced to hydroxide ion (OH-) and hydrogen gas ($2H_2O- + 2e- \rightarrow H_2 + 2OH-$) at the cathode electrode. The produced OH-ion is then transported to the anode electrode through the membrane and discharged to $O_2$ and water ($2OH- \rightarrow H_2O +1/2O_2 + 2e-$).

US006410160B1 discloses a method for producing porous metal-containing materials suitable for a variety of uses including filters, electrodes for batteries and fuel cells, light weight structural materials, heat exchangers and catalysts. The method involves vapor phase sintering of a metal oxide green form followed by reduction to form a porous metal-containing material. The porous metal-containing materials may have a porosity of 40 - 90 %, with an interconnected pore volume. The method discloses in US006410160B1 however requires removal of aluminum to form the porous material, by soaking in alkaline conditions, and is only suitable for use with a limited number of materials capable of forming intermetallic compounds. The method disclosed in US006410160B1 further involves the use of toxic vapour of hydrogen halide (HHal, Hal=Cl, Br, F, I) or ammonia halide (NH4Hal, Hal = Cl, Br, F, I).

US4,116,804 discloses an improved electrode having a porous nickel surface layer of greater than 75 microns in thickness and at least 11% in porosity is produced by a process which includes interdiffusing aluminum and nickel at a temperature of at least 660°C to form a nickel-aluminum alloy layer from which aluminum is subsequently selectively dissolved. When used as a cathode in an electrolytic cell for producing hydrogen, chlorine and caustic from brine, the improved electrode exhibits exceptionally low hydrogen overvoltage. The method is however only suitable for use with metals capable of reacting with aluminium and of forming intermetallic phases.

There is thus a need to a method that can produce porous electrodes with controlled properties, using a variety of materials.

The present invention aims at providing a method for producing a porous electrode comprising one or more electrochemically active metals or metal compounds, which exhibit a higher electrochemical surface area, with a lower overpotential and thus an improved performance when for example applied in an alkaline water electrolyzer. It would also be desirable in case the porous electrodes have self-supporting properties. Some of the possible advantages are that self-supporting electrodes can simplify the electrode fabrication process and reduce the cost of materials and labour. They can improve the electrical integration between the active materials and the current collector, which can enhance the electrochemical performance and efficiency. Self-supporting electrodes can provide better contact between the electrode and the electrolyte, which can facilitate the charge transfer and ion diffusion. Furthermore, the sintered electrodes can offer more space and flexibility to accommodate the volume change and stress of the active materials during cycling, which can improve the stability and durability.

The present invention also aims at providing a method for producing such a porous electrode.

The porous electrodes according to the invention combine a high porosity to enhance their electrochemical performance and durability, whilst enabling self-supporting properties . Porosity can improve the performance and stability of the electrodes in several ways. Some of the benefits of porosity are:

- Porosity can increase the available surface area of the electrodes, which can provide more active sites for the electrochemical reactions.
- Porosity can facilitate the transport of reagents (ions and solvent) and gas products in the electrodes, which can reduce the risk to ohmic and mass transfer losses.
- Porosity can accommodate the volume change and stress of the active materials during cycling, which can limit the risk to cracking and degradation

SUMMARY

The present invention provides a method for producing a porous electrode.

In a first embodiment this method comprises the steps of:

- Providing a solid green body, consisting of a polymer comprising a plurality of embedded particles of one or more electrochemically active metals or metal compounds;
- heating the solid green body with embedded particles to a sintering temperature sufficiently high to cause sintering of the particles,
  wherein the sintering temperature of the one or more electrochemically active metals or metal compounds is higher than decomposition temperature of the polymer that is smaller than or equal to the sintering temperature of the one or more electrochemically active metals or metal compounds.

In the method according to the invention and as further detailed below, the solid green body is either obtained by;

- mixing the plurality of particles of one or more electrochemically active metals or metal compounds with a thermoplastic polymer to form a mixture; heating the mixture to melt the thermoplastic polymer, thereby forming a slurry; and casting the slurry, thereby forming a solid green body having the particles embedded therein; or
- by mixing one or more liquid polymerisable monomers with a plurality of particles of one or more electrochemically active metals or metal compounds to form a slurry; casting the slurry and initiating polymerisation of the polymerisable monomers in the slurry to form a polymer, thereby forming a solid green body having the particles embedded therein.

Thus in an embodiment the present invention provides a method for producing a porous electrode, said method comprising the steps of :

- mixing the plurality of particles of one or more electrochemically active metals or metal compounds with a thermoplastic polymer to form a mixture;
- heating the mixture to melt the thermoplastic polymer, thereby forming a slurry;
- casting the slurry, thereby forming a solid green body having the particles embedded therein; and
- heating the solid green body with embedded particles to a sintering temperature sufficiently high to cause sintering of the particles,
  wherein the sintering temperature of the one or more electrochemically active metals or metal compounds is higher than decomposition temperature of the polymer that is smaller than or equal to the sintering temperature of the one or more electrochemically active metals or metal compounds.

Thus in another embodiment the present invention provides a method for producing a porous electrode, said method comprising the steps of :

- mixing one or more liquid polymerisable monomers with a plurality of particles of one or more electrochemically active metals or metal compounds to form a slurry;
- casting of a slurry using one of the enclosed methods to form a desired shape of the electrode
- initiating polymerisation of the polymerisable monomers in the slurry to form a polymer, thereby forming a solid green body having the particles embedded therein;
- heating the solid green body with embedded particles to a sintering temperature sufficiently high to cause sintering of the particles, wherein the sintering temperature of the one or more electrochemically active metals or metal compounds is higher than decomposition temperature of the polymer that is smaller than or equal to the sintering temperature of the one or more electrochemically active metals or metal compounds.

In a particular method, the present invention provide a method for producing a porous electrode, the method comprises the steps of:

- mixing one or more liquid polymerisable monomerswith a plurality of particles of one or more electrochemically active metals or metal compounds to form a slurry;
- heating the slurry to a polymerisation temperature to cause polymerisation of the polymerisable monomer to form a polymer, thereby forming a solid green body having the particles embedded therein;
- heating the solid green body with embedded particles to a sintering temperature sufficiently high to cause sintering of the particles,

wherein the sintering temperature of the one or more electrochemically active metals or metal compounds is higher than the polymerisation temperature,
and wherein the polymerisable monomeris selected such that the polymer formed therefrom has a decomposition temperature that is smaller than or equal to the sintering temperature of the one or more electrochemically active metals or metal compounds.

In a particular embodiment, the heating of the solid green body in each of the aforementioned methods includes;

- a first stage wherein the green body is heated up to and above the polymer decomposition temperature, preferably for a time sufficient to decompose and remove the polymer; and
- a second stage wherein the green body is further heated to the sintering temperature of the particles of the one or more electrochemically active metals and/or metal compounds, preferably for a time sufficient for complete sintering of the particles of the one or more electrochemically active metals and/or metal compounds

The porous electrodes thus obtained are characterized in that they comprise at least 90 wt. %, preferably at least 95 wt.% of connected particles of the one or more electrochemically active metals or metal compounds, and in that at least 80%, preferably up to 95% of the polymer mass of the green body is removed.

In some embodiments, the solid green body comprises 20-80 wt.% of particles of one or more metals or metal oxides, or a mixture of one or more metals and one or more metal oxides. In a particular embodiment the solid green body comprises 40-80 wt.%, more in particular 50-80 wt.%, even more in particular 60-80 wt.%, preferably at least 60 wt.% of particles of one or more metals or metal oxides, or a mixture of one or more metals and one or more metal oxides.

In preparing the green body the slurry comprises comprises 20-80 wt.% of particles of one or more metals or metal oxides, or a mixture of one or more metals and one or more metal oxides, and from 80-20 wt% of the polymer and/or polymerizable monomers. In a particular embodiment the slurry comprises 40-80 wt.%, more in particular 50-80 wt.%, even more in particular 60-80 wt.%, preferably at least 60 wt.% of particles of one or more metals or metal oxides, or a mixture of one or more metals and one or more metal oxides, with complementary values for the polymer and/or polymerizable monomers.

In an embodiment, the particles of the electrochemically active metal or metal compound have a particle size of between 5 nm and 100 micron, preferably between 10 nm and 50 micron, more preferably between 25 nm and 25 micron, as for example measured by electron microscopy.

In a particular embodiment, the particles have a bimodal particle size distribution wherein25-75 % (preferably 40-60 %) of the metal particles have a size between 1 and 250 micron, preferably between 5 and 200 micron, more preferably between 5 and 150 micron; and 75-25 % (preferably 60-40 %) of the metal particles have a size between 5 and 500 nm, preferably between 10 and 500 nm, more preferably between 10 and 250 nm, as measured by electron microscopy.

In an embodiment, sintering may be carried out in a reducing gas, an oxidizing gas or an inert gas.

In another embodiment, sintering may be followed by a reduction step, in particular when the initial mixture contains metal particle oxides such as NiO, CuO, Cu2O and others and desired final state of electrode is pure metal particles such as Ni, Cu etc. Suitable reducing gases include H2, CO or a mixture of them with an inert gas.

In an embodiment of the invention a layer of such a slurry is cast onto a support material and allowed to cure, either by lowering the temperature below the melt temperature in case of a slurry obtained from a mixture of a thermoplastic polymer with said plurality of particles of one or more electrochemically active metals or metal compounds, or by initiating the polymerisation of the mixing of the plurality of particles of one or more electrochemically active metals or metal compounds with the polymerisable monomers. Advantageously, the slurry is applied in a layer having a thickness of 30 - 2000 micron, preferably 50 - 2000 micron, more preferably 100- 2000 micron, most preferably 100-1500 micron, in particular 200-1000 micron, more particularly 250-500 micron. The thickness is important as it permits achieving a higher electrochemical surface area and a higher electrochemical activity.

The present invention also relates to a porous electrode obtained with the above-described method.

The present invention further relates to a porous electrode comprising at least 90 wt. %, preferably at least 95 wt.% of connected particles of the one or more electrochemically active metals or metal compounds. In particular a porous electrode obtained according to the methods of the invention and characterized in that it comprises at least 90 wt. %, preferably at least 95 wt.% of connected particles of the one or more electrochemically active metals or metal compounds, and in that at least 80%, preferably up to 95% of the polymer mass of the green body is removed.

In an embodiment, the electrode has a thickness of at least 30 micron, preferably at least 50 microns, more preferably at least 100 micron, most preferably at least 150 micron, in particular at least 200 micron, in particular at least 250 micron.

In an embodiment, the electrode has a porosity of between 30 and 90%, preferably between 40% and 90%, more preferably between 50 and 80%, most preferably between 60 and 80%.

In an embodiment, the electrode is porous and comprises pores with an average pore size of 0.01 to 10 $\mu$m, preferably from 0.05 $\mu$m to 5 $\mu$m, more preferably from 0.05 $\mu$m to 1 $\mu$m.

In an embodiment, the porous electrode has an ex-situ gas permeability of the porous electrode varies from 0.001 to 1000 L/min/cm2/bar.

In a further aspect the present invention provides the use of the porous electrode as herein defined, or obtained according to the method of the present invention, in electrochemical applications, such as a fuel-cell, hydrogen peroxide production and alkaline water electrolysis.

LIST OF FIGURES

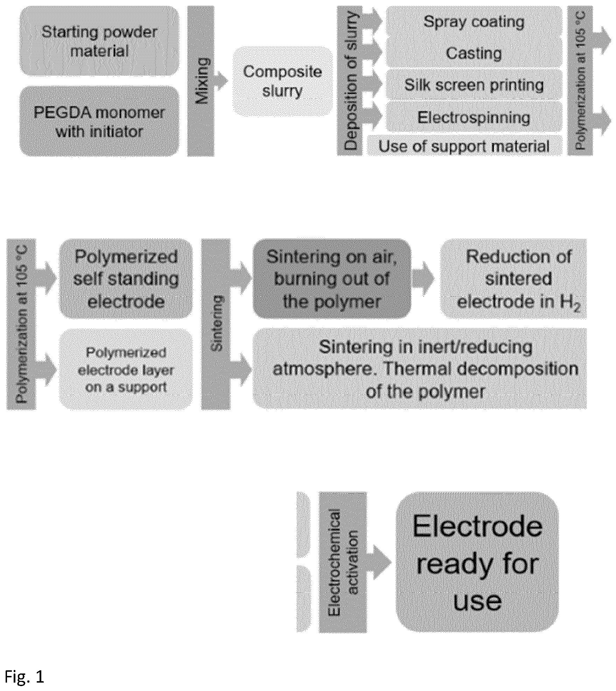

FIG. 1 illustrates, in a flowchart, operations for applying the methods of the invention in different embodiments.

Fig 2: Example of electrode preparation procedure starting with mixture of micro and nanopowders of NiO and additional reduction step in $H_2$

Fig 3: Example of electrode preparation procedure starting with nanoNi powder, spray-coating of slurry on a Ni mesh support and sintering in $H_2$/Ar atmosphere

Fig 4: Optimized temperature profiles for sintering of: (a) NiO powders on air and (b) Ni powders in $H_2$/Ar

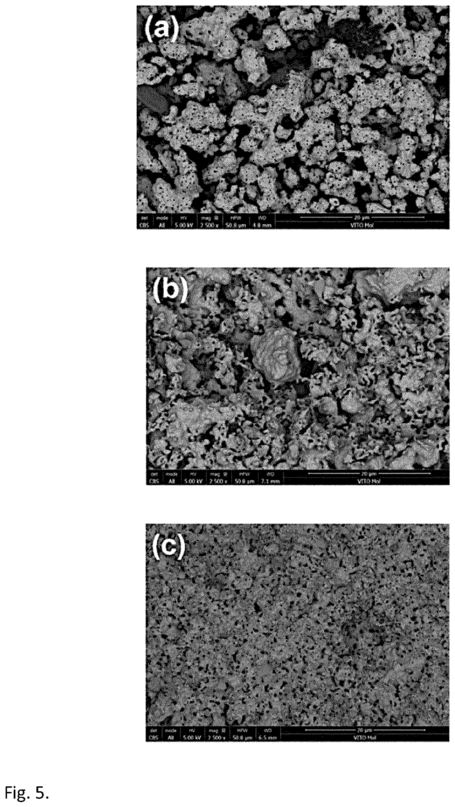

Fig. 5. SEM images of sintered/reduced Ni electrodes casted from different powder compositions: (a) pure $\mu$Ni powder, (b) 50 wt. % $\mu$NiO/50 wt. % nanoNiO (), pure nano NiO powder

Fig. 6. Measured volumetric ($m^2/cm^3$) electrochemical surface area (VSA) of some of prepared electrodes and reference of commercially available materials/IMEC Ni nanomesh

Fig. 7. Linear sweep voltametry curves for hydrogen evolution reaction (HER) of different Ni based materials in 1M KOH solution, 2 mV/sec scanning speed. 100 nNi casted electrode and 100nNi sprayed electrodes are made according to the present invention

Fig. 8. Linear sweep voltametry curves for oxygen evolution reaction (OER) of different Ni based materials in 1M KOH solution, 2 mV/sec scanning speed. 100 nNi casted electrode and 100nNi sprayed electrodes are made according to the present invention.

Fig. 9. Linear sweep voltametry curves comparison between activated and non activated sprayed electrode. Used powder 100% nano Nickel, 1M KOH solution.

DETAILED DESCRIPTION

The present invention provides a method for producing a porous electrode.

In a first embodiment this method comprises the steps of:

- Providing a solid green body, consisting of a polymer comprising a plurality of embedded particles of one or more electrochemically active metals or metal compounds;
- heating the solid green body with embedded particles to a sintering temperature sufficiently high to cause sintering of the particles,
  wherein the sintering temperature of the one or more electrochemically active metals or metal compounds is higher than decomposition temperature of the polymer that is smaller than or equal to the sintering temperature of the one or more electrochemically active metals or metal compounds.

It will be apparent to the skilled person that the polymeric solid green body comprising the plurality of embedded particles of one or more electrochemically active metals or metal compounds, can be obtained in different ways. All of these are considered as being embraced in the context of the present invention. The invention is based on the understanding that this green body only serves as an initial moldable binder for the plurality of embedded particles of one or more electrochemically active metals or metal compounds, and that this binder is sacrified in the subsequent sintering step whereby the plurality of embedded particles of one or more electrochemically active metals or metal compounds are connected to each other.

The solid green body can for example be obtained by mixing the plurality of particles of one or more electrochemically active metals or metal compounds with a thermoplastic polymer to form a mixture; heating the mixture to melt the thermoplastic polymer, thereby forming a slurry; and casting the slurry, thereby forming a solid green body having the particles embedded therein.

Thus in an embodiment the present invention provides a method for producing a porous electrode, said method comprising the steps of :

- mixing the plurality of particles of one or more electrochemically active metals or metal compounds with a thermoplastic polymer to form a mixture;
- heating the mixture to melt the thermoplastic polymer, thereby forming a slurry;
- casting the slurry, thereby forming a solid green body having the particles embedded therein; and
- heating the solid green body with embedded particles to a sintering temperature sufficiently high to cause sintering of the particles,
  wherein the sintering temperature of the one or more electrochemically active metals or metal compounds is higher than decomposition temperature of the polymer that is smaller than or equal to the sintering temperature of the one or more electrochemically active metals or metal compounds.

In an alternative method the polymer used in the solid green body is produced in situ in the presence of the plurality of particles of one or more electrochemically active metals or metal compounds. In this method the solid green body is obtained by mixing one or more liquid polymerisable monomers with a plurality of particles of one or more electrochemically active metals or metal compounds to form a slurry; casting the slurry and initiating polymerisation of the polymerisable monomers in the slurry to form a polymer, thereby forming a solid green body having the particles embedded therein.

Thus in an embodiment the present invention provides a method for producing a porous electrode, said method comprising the steps of :

- mixing one or more liquid polymerisable monomers with a plurality of particles of one or more electrochemically active metals or metal compounds to form a slurry;
- casting of a slurry using one of the enclosed methods to form a desired shape of the electrode
- initiating polymerisation of the polymerisable monomers in the slurry to form a polymer, thereby forming a solid green body having the particles embedded therein;
- heating the solid green body with embedded particles to a sintering temperature sufficiently high to cause sintering of the particles, wherein the sintering temperature of the one or more electrochemically active metals or metal compounds is higher than decomposition temperature of the polymer that is smaller than or equal to the sintering temperature of the one or more electrochemically active metals or metal compounds.

Depending on the polymer, different methods can be employed to initiate the polymerisation of the polymerisable monomers, such as thermal polymerization, photopolymerization, radical polymerization and the like.

In a particular method, the solid green body is obtained by mixing one or more liquid polymerisable monomers with a thermal polimerization initiator and a plurality of particles of one or more electrochemically active metals or metal compounds to form a slurry; and heating the slurry to a polymerisation temperature to cause polymerisation of the polymerisable monomer to form a polymer, thereby forming a solid green body having the particles embedded therein.

Thus in an embodiment the present invention provide a method for producing a porous electrod, the method comprises the steps of:

- mixing one or more liquid polymerisable monomers with with a thermal polimerization initiatorand a plurality of particles of one or more electrochemically active metals or metal compounds to form a slurry;
- casting of a slurry using one of the enclosed methods to form a desired shape of the electrode
- heating the slurry to a polymerisation temperature to cause polymerisation of the polymerisable monomer to form a polymer, thereby forming a solid green body having the particles embedded therein;
- heating the solid green body with embedded particles to a sintering temperature sufficiently high to cause sintering of the particles,

  wherein the sintering temperature of the one or more electrochemically active metals or metal compounds is higher than the polymerisation temperature,

and wherein the polymerisable monomer is selected such that the polymer formed therefrom has a decomposition temperature that is smaller than or equal to the sintering temperature of the one or more electrochemically active metals or metal compounds.

As mentioned above, the polymerisation of the one or more polymerisable monomers results in the formation of a green body with a polymer phase which acts as a binder for holding the particles together. In this polymeric green body, particles of the one or more electrochemically active metals and/or metal compounds may contact each other, or they may be separated from each other by the polymer. In each of the aforementioned method for producing a porous electrode, it includes heating of the solid green body at a sintering temperature that is sufficientlty high to cause sintering of the particles. In a particular embodiment, and with reference to the examples hereinafter, the heating is performed stepwise, where in a first stage the green body is heated to a temperature above the decomposition temperature of the polymer, herein after also referred to as the polymer decomposition temperature, which has the effect that in this first stage, the polymer is decomposed and removed. Usually, polymer removal will start at an outer part and gradually proceed inwardly. At the same time, sintering process is started. Because the polymer decomposition temperature is lower than the final sintering temperature, at least part and usually the majority of the polymer will be decomposed before the finalization of the sintering of the particles of the one or more electrochemically active metals and/or metal compounds. The polymer removal gives rise to the formation of holes or pores between the particles of the one or more electrochemically active metals and/or metal compounds and thereby gives rise to the formation of a three-dimensional porous network of particles, in which the surface of the metal particles is exposed.

Upon further heating of the green body to the sintering temperature, the particles of the one or more electrochemically active metals and/or metal compounds move to sinter together and thereby get connected to each other so that an interconnected three-dimensional structure of the particles of the one or more electrochemically active metals and/or metal compounds is formed. Thereby, the porosity formed by the polymer removal may be maintained to a large extent. Thus a stable, cohesive structure of interconnected particles is formed, with pores between the particles. The particles are immobilized in this cohesive structure. This is an advantage when such a structure is used in an electrochemical cell, since the risk to leaching of particles of electrochemically active metals or metal compounds from the electrode structure may be reduced to a minimum.

The inventors have observed that the electrode obtained with the method of this invention shows a high mechanical strength, which is important during use of the electrode where it is integrated between other active materials and the current collector.

The inventors have also observed that while using the method of this invention the electrode obtained with controlled thickness of no more 50 $\mu$m on a metallic mesh support shows a high flexibility and mechanical stability. As mentioned above, using the method of the invention a three-dimensional porous network of particles is being formed. This three-dimensional porous network offers space and flexibility to accommodate the volume change and stress of the active materials during cycling, which inevitably improves the stability and durability of the electrodes thus obtained.

In some embodiments, the solid green body comprises 20-80 wt.% of particles of one or more metals or metal oxides, or a mixture of one or more metals and one or more metal oxides. In a particular embodiment the solid green body comprises 40-80 wt.%, more in particular 50-80 wt.%, even more in particular 60-80 wt.%, preferably at least 60 wt.% of particles of one or more metals or metal oxides, or a mixture of one or more metals and one or more metal oxides. In preparing the green body a low loading, i.e. from about 20 to 40 wt.% with particles results in a slurry with a low viscosity, that is suitable to be formed into an electrode using a variety of methods, in particular by spraying on a mechanical reinforcement or support material. In preparing the green body a high loading, i.e. of at least 40 wt% with particles results in a slurry with a medium to high viscosity, that is suitable to be formed into an electrode using a variety of methods. Although the slurry is suitable for being casted onto a porous carrier, for example a net or a grid, a high viscosity makes the slurry particularly suitable for being applied as a layer with a large thickness of several hundreds or thousands of microns, which is then suitable for being converted into a self-standing or self-supporting electrode. In a self-standing or self-supporting electrode, no other/external material is needed to support the electrode material or to provide mechanical reinforcement or support to maintain structural integrity and product shape.

In an embodiment, the particles of the electrochemically active metal or metal compound have a particle size of between 5 nm and 100 micron, preferably between 10 nm and 50 micron, more preferably between 25 nm and 25 micron, as for example measured by electron microscopy.

According to an embodiment of the invention the particles of the electrochemically active metal or metal compound have a multimodal, in particular a bimodal particle size distribution. A multimodal particle size distribution implies that fractions with different ranges in particle sizes are used in the manufacturing of the porous electrodes with the methods as herein disclosed. For example, in case of a bimodal particle size distribution one fraction of the particles have a size in the micron meter range, and a second fraction of the particles have a size in the nanometer range. Whereas the nanoparticles provide a high electrochemically active surface area and are more expensive, the larger particles in the micron meter range ensure electrochemical contact and percolation and are less expensive. In a particular embodiment, the particles have a bimodal particle size distribution wherein25-75 % (preferably 40-60 %) of the metal particles have a size between 1 and 250 micron, preferably between 5 and 200 micron, more preferably between 5 and 150 micron; and 75-25 % (preferably 60-40 %) of the metal particles have a size between 5 and 500 nm, preferably between 10 and 500 nm, more preferably between 10 and 250 nm, as measured by electron microscopy.

The metal particles may have various shapes, such as a rounded shape, or the shape of a filament or rod. A mixture of shapes may be used to ensure sufficient active surface area and sufficient degree of connection between the particles.

As already mentioned herein before, in an embodiment, the heating of the green body comprising a polymer phase having the particles embedded therein to the sintering temperature may be subjected to a temperature- time regime, in which the temperature is increased in a step-wise manner, and each temperature is maintained for a certain period of time. Such a temperature-time regime may be preferred to on the on hand optimise the polymer removal rate and formation of a porous structure, and on the other hand control the sintering process to optimise adherance of the particles and mechanical strength of the structure. It shall be clear that heating may also involve a continuous temperature increase, or any other temperature-time profile considered suitable by the skilled person. In the method of this invention, a first stage in the temperature-time heating regime will mainly involve decomposition of the polymer phase, and typically includes first step of desorbing any volatile species on the surface of the green body, and second step of maintaining the green body at a polymer decomposition temperature for a time sufficient to decompose the polymer phase. This may give rise to the formation of some remaining carbon, although the inventors have observed that polymer mass removal may be achieved up to 95% while sintering on air (polymer removal up to 80% while sintering in reducing atmosphere). At the same time, this polymer decomposition temperature is sufficiuently high and choosen to see an actual start of thesintering process, but not sufficient to have complete sintering of the metal particles and to provide a mechanically stable structure. Thereto, in a second stage, as the temperature is increased up to the sintering temperature, the sintering process of the metal particles is completed, yielding the adherance of the particles and mechanical strength of the structure without loss of porosity. This may be achieved because the sintering temperature of the one or more electrochemically active metals or metal compounds is higher than the polymer decomposition temperature that is smaller than or equal to the sintering temperature of the one or more electrochemically active metals or metal compounds.

Depending on the nature of the particles of one or more electrochemically active metals or one or more electrochemically active metal compounds, sintering may be carried out in a desired gas atmosphere. In an embodiment, sintering may be carried out in an oxidizing gas to cause efficient removal of the polymer, often up to 95%. Suitable examples of oxidizing gases include air, a carbon dioxide containing gas, an oxygen containing gas or any other oxidizing gas considered suitable by the skilled person. According to another embodiment sintering may be carried out in an inert gas atmosphere. Suitable inert gases include N2, He, Ar, Ne etc. In order to prevent surface oxidation the latter, is preferred in case the particles of one or more electrochemically active metals or one or more electrochemically active metal compounds consist of pure metal particles, such as Ni, Cu, and the like.

In another embodiment, sintering may be followed by a reduction step, in particular when the initial mixture contains metal particle oxides such as NiO, CuO, Cu2O and others and desired final state of electrode is pure metal particles such as Ni, Cu etc. Suitable reducing gases include H2, CO or a mixture of them with an inert gas.

The methods of the present invention are provided for producing porous electrodes lacking a polymeric binder. The sintering method can be applied to the different configurations wherein electrode compositions are applied, such as spray coating, casting, silk screen printing, electrospinning with and without support material in as far said support material is resistant to the applied sintering temperatures. Although the method of this invention is suitable for producing thin electrodes, for example with a thickness of 30 or 50 micron, it has been observed that the electrochemical activity reaches better levels when the thickness is increased. Also, in order to permit peeling the electrode off from the surface on which the electrode composition has been casted, a minimal thickness is required. Therefore, in order to permit obtaining porous electrodes with outstanding self-supporting properties, the thickness of the to be sinteredpolymer comprising a plurality of particles of one or more electrochemically active metals or metal compounds is preferably at least 100 micron, more preferably at least 150 micron. Although electrodes with a larger thickness can be produced, thickness higher than 2000 μm leads to increased internal stress of the structure and drop in mechanical stability. Usually the porous electrode will have a thickness that is not higher than 2000 micron, preferably not higher than 1000 micron, more preferably not higher than 500 μm. Above 2000 micron mass transport resistance risks to increase to too high levels. As used herein the thickness refers to the thickness of the porous sintered electrode material obtained using the method of the invention, excluding an optional support material.

As mentioned herein before, in the methods of the invention a slurry comprising the plurality of particles of one or more electrochemically active metals or metal compounds with a polymeric component and/or polymerisable monomers, can either be obtained from melting a mixture of a thermoplastic polymer with said plurality of particles of one or more electrochemically active metals or metal compounds, or by mixing the plurality of particles of one or more electrochemically active metals or metal compounds with one or more liquid polymerisable monomers.

In an embodiment of the invention a layer of such a slurry is cast onto a support material and allowed to cure, either by lowering the temperature below the melt temperature in case of a slurry obtained from a mixture of a thermoplastic polymer with said plurality of particles of one or more electrochemically active metals or metal compounds, or by initiating the polymerisation of the mixing of the plurality of particles of one or more electrochemically active metals or metal compounds with the polymerisable monomers. Usually, the layer of the slurry will be applied in a thickness of at least 10 micron, preferably at least 100 micron, more preferably at least 150 micron. When production of electrodes with a larger thickness is envisaged, the slurry may be applied in a larger layer thickness of at least 250 micron. Usually the slurry will be applied in a thickness that is not higher than 2000 micron, preferably not higher than 1000 micron, more preferably not higher than 500 $\mu$m.

Although some shrinking of the slurry may occur during sintering, the degree of linear shrinking is limited and will usually not be higher than about 7.5%. As a result, self-supporting electrodes may be produced with a thickness that could not be achieved up to now. Advantageously, the electrode has a thickness of at least 30 micron, preferably at least 50 microns, preferably at least 100 micron, preferably at least 150 micron, more preferably at least 200 micron, most preferably at least 250 micron. The thickness is important as it permits achieving a higher electrochemical surface area and a higher electrochemical activity.

Within the scope of this invention, a wide variety of support materials may be used. The slurry may for example be cast onto a removable support material, for example a flat surface, and be peeled off after polymerisation has been carried out. The support material may also comprise a porous frame, a porous grid, a porous membrane of an electrochemically conductive material structures (such as mesh, felt, foam or others) which will form part of the electrode after it has been coated with the slurry. In such cases the slurry will not be peeled off after polymerisation has been carried out, and the support material will usually have a sintering temperature that is equal to higher than the sintering temperature of the one or more electrochemically active metals or metal compounds. It has been observed that in case the supporting material with a sintering temperature close to the sintering temperature applied for sintering the one or more electrochemically active metals or metal compounds, an strong binding is achieved with a full integration of the electrochemically active metals or metal compounds into the support material.

In an embodiment, the polymerisable monomer is selected such that a polymer phase formed therefrom has a decomposition temperature that is smaller than or equal to the sintering temperature of the one or more electrochemically active metals or one or more electrochemically active metal compounds. Within the scope of this invention a wide range of polymerisable monomers may be used. Examples of suitable polymerisable monomers include styrene, an acrylate or methacrylate, an epoxide, a vinyl ether or a vinyl ester, different polyamides, a nitrile, a polymerisable ionic liquid, or a mixture of two or more hereof.

Within the scope of this invention "polymerisable monomer" includes monomeric compounds such as styrene, methylacrylate, methylmethacrylate etc;, but it also includes dimers, trimers or polymers of a limited molecular weight which can be further polymerised.

Polymerisable monomers suitable for use with this invention include alkenes, such as styrene which can undergo radical polymerization to form polystyrene ; acrylates and methacrylates, such as methyl methacrylate, can undergo free radical or cationic polymerization to form polymethyl methacrylate (PMMA); epoxides, such as ethylene oxide and propylene oxide, which can undergo ring-opening polymerization to form polyethers; vinyl ethers and vinyl esters, such as vinyl acetate and vinyl chloride, can undergo addition polymerization to form polyvinyl acetate (PVA) and polyvinyl chloride (PVC), respectively; amines, imines or lactams, such as aniline, benzidine or caprolactam, which can undergo condensation polymerization to form polyamides and polyimides, such as nylon; and nitriles such as acrylonitrile.

In an embodiment of the polymer resin is selected from an acrylate that can be cross-linked using a thermal initiator (e.g. a cross-linking agent) or an acrylate that may be cross-linked using an ultraviolet (UV) light-activated initiator, for example but not limited to, polyethylene glycol diacrylate (PEGDA) plus a thermal initiator (e.g., 3 wt % Luperox 331).

Some examples of polymers that can be further polymerized are: Polyurethanes, which are formed by the reaction of diisocyanates and polyols. Polyurethanes have isocyanate groups at the ends of their chains that can react with more polyols to form longer chains or cross-links. Polyesters, which are formed by the reaction of dicarboxylic acids and diols. Polyesters have carboxylic acid and hydroxyl groups at the ends of their chains that can react with more diols and dicarboxylic acids to form longer chains or cross-links. Polyamides, which are formed by the reaction of dicarboxylic acids and diamines. Polyamides have carboxylic acid and amine groups at the ends of their chains that can react with more diamines and dicarboxylic acids to form longer chains or cross-links. These polymers can be further polymerized by various methods, such as heat, light, catalysts, or initiators. The degree of further polymerization depends on the type and amount of reactive groups, the reaction conditions, and the desired properties of the final product. Further polymerization can modify the molecular weight, structure, morphology, viscosity, elasticity, strength, thermal stability, of the polymers.

In an embodiment, the mixture may contain a polymerisation initiator.

The present invention also relates to a porous electrode obtained with the above-described method.

The present invention further relates to a porous electrode comprising at least 90 wt. %, preferably at least 95 wt.% of connected particles of the one or more electrochemically active metals or metal compounds.

In an embodiment, the electrode has a thickness of at least 30 micron, preferably at least 50 microns, more preferably at least 100 micron, most preferably at least 150 micron, in particular at least 200 micron, in particular at least 250 micron.

In an embodiment, the electrode has a porosity of between 30 and 90%, preferably between 40% and 90%, more preferably between 50 and 80%, most preferably between 60 and 80%.

In an embodiment, the electrode is porous and comprises pores with an average pore size of 0.01 to 10 $\mu$m, preferably from 0.05 $\mu$m to 5 $\mu$m, more preferably from 0.05 $\mu$m to 1 $\mu$m.

In an embodiment, the porous electrode has an ex-situ gas permeability of the porous electrode varies from 0.001 to 1000 L/min/cm2/bar.

In a further aspect the present invention provides the use of the porous electrode as herein defined, or obtained according to the method of the present invention, in electrochemical applications, such as a fuel-cell, hydrogen peroxide production and alkaline water electrolysis The invention is further Illustrated in the examples given below.

Example 1: NiO particles based slurry preparation .

A Thinky mixer was used to prepare a slurry by mixing NiO particles either as nanopowder (obtained from Merck - Nickel(II) oxide, nanopowder, <50 nm or <100nm average particle size (TEM), 99.8% trace metals basis) and/or as micropowder (obtained from Merck - Nickel(II) oxide, micropowder, <100$\mu$m average particle size (-325 mesh), 99 % trace metals basis) - the composition of the different Ni mixtures is provided in Table 2 - with PolyEthelyneGlycol DiAcrylate (PEGDA) and Luperox L331 initiator to form a homogenous slurry for casting, in the amounts indicated in Table 1 below.

Table 1.

| Reagent | Wt. (%) | Wt. (g) |
|---|---|---|
| NiO | 70 | 2,1 |
| PEGDA | 27 | 0,81 |
| L331 initiator | 3 | 0,09 |

The composition of the Ni particles was as follows :

Table 2

| Example | Nano particles Wt. (%) | Micro particles Wt. % |
|---|---|---|
| 1.1 | 100 | |
| 1.2 | | 100 |
| 1.3 | 50 | 50 |
| 1.4 | 70 | 30 |

Mixing was carried out by mixing half of the NiO with the PEGDA, and mixing the mixture at 2000 rpm for 2 minutes. The remaining NiO was added and it was mixed at 2000 rpm for 2 minutes. Thereafter, the initiator was added and the thus obtained mixture was mixed again at 2000 rpm for 2 minutes. To avoid bubble formation, the mixture was defoamed at 900 rpm for 1 minute

Example 2: Ni particles based slurry preparation.

In a Thinky mixer the powder of Ni particles was mixed with PEGDA and L331 initiator to form a homogenous slurry. The amounts mixed are given in table 3 below. The composition of the Ni particles in relation to their size is disclosed in table 4 below.

Table 3.

| Reagent | Wt. (%) | Wt. (g) |
|---|---|---|
| Ni | 48.9 | 0.2445 |
| PEGDA | 46.9 | 0.2345 |
| L331 initiator | 4.2 | 0,021 |

The composition of the Ni particles was as follows :

Table 4.

| Ni | Nano particles Wt. (%) | Micro particles Wt. % |
|---|---|---|
| 2.1 | 100 | |
| 2.2 | | 100 |
| 2.3 | 50 | 50 |

Example 3: Casting of an electrode into a PTFE ( polytetrafluoroethylene) casting mold.

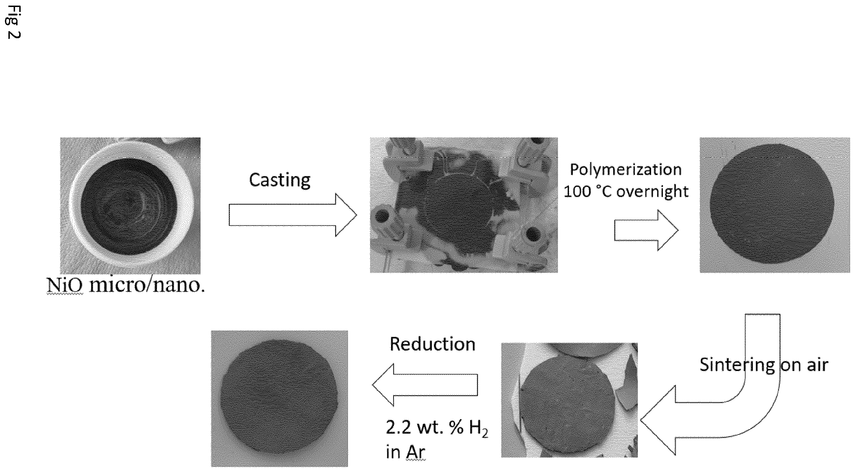

As shown in Figure 2, the slurry respectively obtained from example 1.1, 1.2, 2.1 and 2.2 was poured onto the sample holder consisting of glass plate with thickness of 4 mm and sizes 12x6cm as a supportive layer and PTFE casting mold layer. After pouring the slurry into casting mold another glass plate with the same sizes was placed as a top layer and then compressed using PEEK clips with the maximum momentum 2 N·m to form a cylindrical shape electrode. Thickness of the electrode is defined by thickness of PTFE casting mold, PTFE mold with thickness 250$\mu$m and 500$\mu$m were used for the experiments.

Example 4: Deposition of an electrode by spray coating technique.

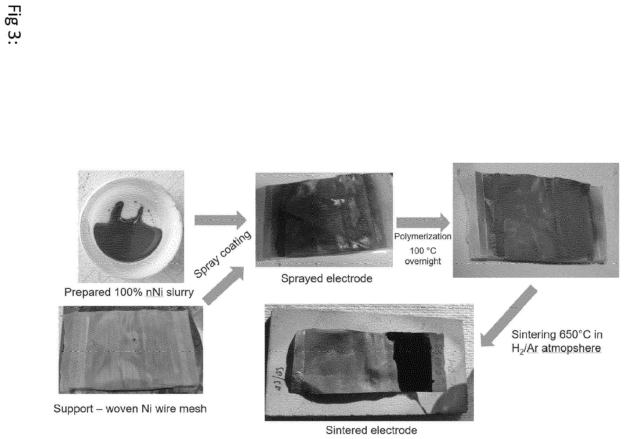

The slurry obtained from example 1.1 and 2.2 was supplied to a spray coating gun and deposited on a Ni woven mesh (400 mesh, pore size 30 $\mu$m, available from Heanjia super metals Co., Ltd). Three layers of slurry were applied as shown in figure 3. After sintering in H2/Ar the thickness of deposited layer was ~25 $\mu$m.

Example 5. Polymerization.

The casted slurry samples obtained in Example 3 and the slurry spray coated on a Ni woven mesh obtained in Example 4 was placed in an oven at a temperature of 100 °C overnight, to cause polymerisation of the PEGDA and an electrode green body was obtained. In this electrode green body, the polymer acts as a binder or a template for the Ni or NiO particles.

Example 6: Sintering

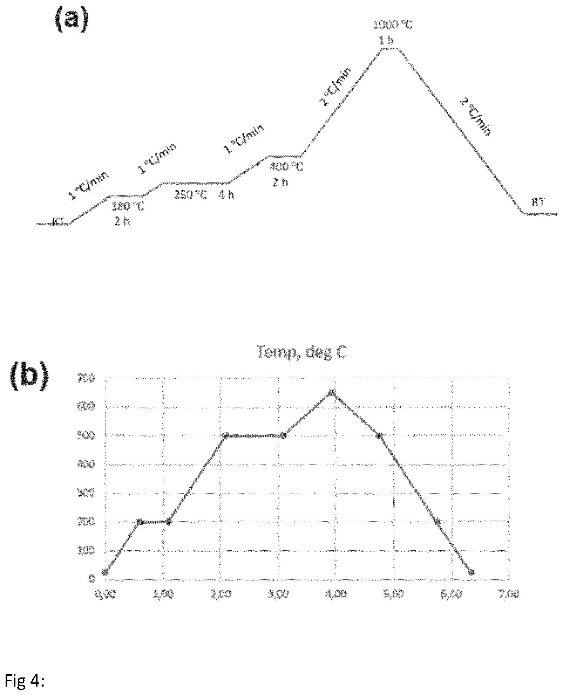

The electrode green body samples obtained from example 5 was then transferred to a furnace for polymer removal and sintering and subjected to a temperature-time regime in air as shown in figure 4a to provide an NiO electrode. The weight of the electrode is recorded before and after the sintering steps to confirm polymer removal. Polymer mass removal degree was calculated using the formula below and was found to be about 91%:

$$R_{polymer\ removal} = \frac{m_{before\ sintering} - m_{after\ sintering}}{C_{polymer\ in\ slurry} * m_{electrode\ before\ sintering}}$$

In this formula :

- R is polymer removal degree,
- m is the mass of the green body (before or after sintering),
- C is the concentration of the polymer in slurry (including monomer and initiator).

This was confirmed with thermal gravimetric analysis (TGA) analysis.
The electrode from example 4 was also subjected to a sintering procedure in 5% $H_2$ in Ar using temperature as shown in figure 4b to provide Ni electrode. In this case polymer mass removal degree was found to be about 80%.

Example 7: Reduction of NiO to Ni.

The NiO electrode obtained from example 6 was reduced to Ni by contacting it with a gas mixture of H2 in Ar in cylinder. The reduction rate is then calculated as follow:

$$Rr = \frac{real\ mass\ of\ the\ lost\ oxygen}{theoretical\ mass\ of\ oxygen\ in\ the\ sample\ before\ reduction}$$

$$= \frac{m_{before\ reduction} - m_{after\ reduction}}{\frac{M_O}{M_{NiO}} * m_{before\ reduction}}$$

The Ni electrode reduction degree was found to be ~35%

Example 8: Characterization of the electrodes.

The Ni electrode obtained from example 6 and the NiO electrode obtained from example 7 were characterized in terms of thickness, density, pore size, porosity, microstructure electrochemical surface area and electrochemical activity in alkaline water electrolyzer.

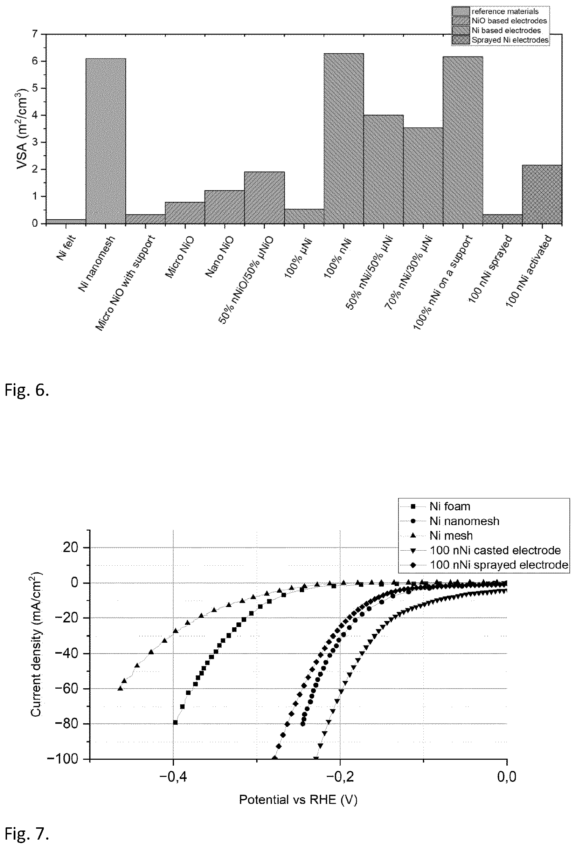

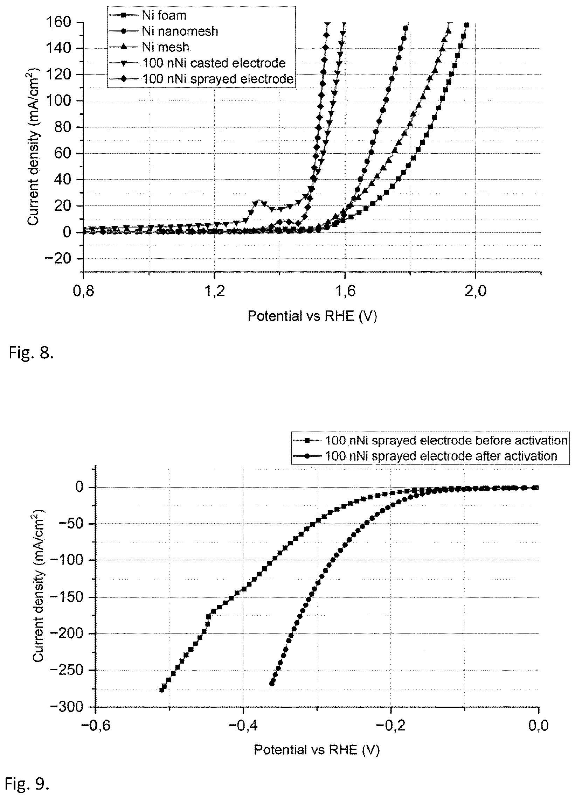

Fig 7-9 presents the iV curves of electrodes in alkaline water electrolyzer for both oxygen evolution reaction and hydrogen evolution reaction. The experiment was carried out in 1 M KOH at room temperature and ambient pressure. Fig 9 shows improvement of sprayed elecrode's performance after activation.

Fig 6 represents Measured volumetric (m2/cm3) electrochemical surface area (VSA) of some of prepared electrodes comparing to commercially available Ni based porous materials. This characteristic defines electrochemical activity of porous material. Left down striped bars are referred to electrodes based on NiO starting powder with different ratios between nano and micropowder. Right down striped bars are referred to electrodes made from micro and nano nickel particles. Mesh striped bars for electrode sprayed on NI mesh support from example 4.

Figure 7 represents linear sweep voltametry curves (LSV) for hydrogen evolution reaction (HER) of reference Ni based materials and electrodes obtained from examples 3 and 4 using nanoNi powder: one selfstanding electrode with thickness of 1000 $\mu$m and 1 electrode with thickness of 25 $\mu$m sprayed on the Ni woven mesh support.

LSV curves were recorded in alkaline water electrolyzer mode using following conditions: H-type electrochemical cell, Fumasep FBM bipolar membrane (https://www.fuelcellstore.com/fumasep-fbm), commercial Ni felt as counterelectrode (https://www.alibaba.com/product-detail/Pure-nickel-fiber-mesh-filter-plate 60752320517.html?spm=a2700.shop plgr.41413.13.173379a6QJYsPY), 1M KOH solution on both cathode and anode side, 2 mV/sec scanning speed.

Both Ni electrodes were compared with the following reference materials :

- Ni foam : type 99.5% Nickel Foam 1.6mm thick 95% porosity 20 pores/cm (such as for example commercially available from https://www.goodfellow.com/p/ni00-fa-000152/nickel-foam)
- Ni nanomesh: 99.5% Nickel, nanomesh 1.6mm thick 95% porosity 20 pores/cm (such as described in paper DOI: 10.1021/acsami.8b15888)
- Ni mesh: pure Ni metal mesh 400 MESH, ISO9001 (such as for example commercially available from https://tianhaowiremesh.com/product/pure-nickel-wire-mesh/)

From figure 7 it can be observed that the electrodes obtained using disclosed technology perform much better when compared to the Ni foam and Ni mesh, and that their performance is comparable to the Ni nanomesh, which is an expensive and fragile material with no mechanical strength that needs to be handled with care to avoid destruction.

Figure 8 represents the voltammetry curves for oxygen evolution reaction (anode is working electrode) using reference Ni based materials and electrodes obtained from examples 3 and 4 using nanoNi powder: one selfstanding electrode with thickness of 1000 $\mu$m and 1 electrode with thickness of 25 $\mu$m sprayed on the Ni woven mesh support.

Whereas 1.229 V would be the theoretical potential for water splitting reaction, it can be seen that the electrodes obtained with the method of this invention provide a potential that is close to that of the theoretical one.

Figure 9 shows the current density achieved with an electrode produced from example 4 during first and second LSV using the conditions identical to curves represented on figures 7 and 8. After first LSV there is a clear shift to the right of the of voltammetry curve, indicating that the available electrochemical surface area increases and overpotential of hydrogen evolution reaction decreases pointing on improvement of electrode's performance i.e. electrochemical activation of the electrode.

**Claims**

1. A method for producing a porous electrode, comprising the steps of :

   - Providing a solid green body, consisting of a polymer comprising a plurality of embedded particles of one or more electrochemically active metals or metal compounds;

- heating the solid green body with embedded particles to a sintering temperature sufficiently high to cause sintering of the particles,

wherein the sintering temperature of the one or more electrochemically active metals or metal compounds is higher than decomposition temperature of the polymer that is smaller than or equal to the sintering temperature of the one or more electrochemically active metals or metal compounds.

2. The method of claim 1, wherein the particles of the electrochemically active metal or metal compound have a particle size between 5 nm and 100 micron, preferably between 10 nm and 50 micron, more preferably between 25 nm and 25 micron.

3. The method of claim 1 or claim 2, wherein the particles of the electrochemically active metal or metal compound have a bimodal particle size distribution.

4. The method according to claim 3, wherein 25-75 % (preferably 40-60 %) of the metal particles has a size between 1 and 250 micron, preferably between 5 and 200 micron, more preferably between 5 and 150 micron; and 75-25 % (preferably 60-40 %) of the metal particles has a size between 5 and 500 nm, preferably between 10 and 500 nm, more preferably between 10 and 250 nm, as measured by electron microscopy or dynamic light scattering.

5. The method of any of the previous claims, wherein heating the solid green body with embedded particles to a sintering temperature is carried out in a reducing gas, an oxidizing gas or an inert gas.

6. The method of any of the previous claims, wherein 20-80 wt.% of the one ore more electrochemically active metals or metal compounds, are mixed with 80-20 wt.% of polymerisable monomer.

7. The method of any of the previous claims, wherein the solid green body is either obtained by;

- mixing the plurality of particles of one or more electrochemically active metals or metal compounds with a thermoplastic polymer to form a mixture; heating the mixture to melt the thermoplastic polymer, thereby forming a slurry; and casting the slurry, thereby forming a solid green body having the particles embedded therein; or
- mixing one or more liquid polymerisable monomers with a plurality of particles of one or more electrochemically active metals or metal compounds to form a slurry; casting the slurry and initiating polymerisation of the polymerisable monomers in the slurry to form a polymer, thereby forming a solid green body having the particles embedded therein.

8. The method of the previous claims, wherein the liquid polymerisable monomer is selected from the group comprising styrene, an acrylate or methacrylate, an epoxide, a vinyl ether or a vinyl ester, a nitrile, an amide, a polymerisable ionic liquid, or a liquid polymerisable dimer, trimer or polymer comprising one or more of the aforementioned monomers.

9. The method of claims 7 or 8, wherein a layer of the slurry is deposited onto a support material using variety of techniques including spray-coating, doctor blade coating, silk-screen printing, electrospinning and others.

10. The method of claim 9, wherein the support material comprises a porous frame, a porous grid, a porous membrane of an electrochemically conductive material, having a sintering temperature that is equal to or higher than the sintering temperature of the one or more electrochemically active metals or metal compounds.

11. The method of claim 9 or 10, wherein the slurry is applied in a layer having a thickness of 30 - 2000 micron, preferably 50 - 2000 micron, more preferably 100 - 2000 micron, most preferably 100-1500 micron, in particular 200-1000 micron, more particularly

12. A porous electrode obtained according to the method of any of the previous claims, **characterized in that** it comprises at least 90 wt. %, preferably at least 95 wt.% of connected particles of the one or more electrochemically active metals or metal compounds, and **in that** at least 80%, preferably up to 95% of the polymer of the green body is removed.

13. The electrode as claimed in claim 12, having a thickness of at least 30 microns, preferably at least 50 microns, more preferably at least 100 microns, most preferably at least 150 microns, in particular at least 200 microns, in particular at least 250 microns.

14. The electrode as claimed in claims 12 or 13, having a porosity of between 30 and 90%, preferably between 40% and 90%, more preferably between 50 and 80%, most preferably between 60 and 80%.

15. The electrode as claimed in any one of claims 10 - 12, comprising pores with an average pore size of 0.01 to 10 $\mu$m, preferably from 0.05 $\mu$m to 5 $\mu$m, more preferably from 0.05 $\mu$m to 1 $\mu$m.

16. The electrode as claimed in any one of claims 10 - 15, wherein the ex-situ gas permeability of the porous electrode varies from 0.001 to 1000 L/min/cm2/bar.

Fig. 1

Fig 2

Fig 3:

**(a)**

1000 ℃
1 h

2 ℃/min

2 ℃/min

2 ℃/min

1 ℃/min

1 ℃/min

400 ℃
2 h

1 ℃/min

250 ℃    4 h

180 ℃
2 h

RT

RT

**(b)**

Temp, deg C

Fig 4:

Fig. 5.

Fig. 6.

Fig. 7.

Fig. 8.

Fig. 9.

Europäisches
Patentamt

European
Patent Office

Office européen
des brevets

## EUROPEAN SEARCH REPORT

**Application Number**

EP 23 20 7017

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 355 212 A1 (KAO CORP [JP]) 10 August 2011 (2011-08-10) | 1-3,5-8, 12,14-16 | INV. C25B11/031 |
| Y | * paragraphs [0033] - [0054], [0060] - | 9,10 | C25B11/037 |
| A | [0062], [0113], [0075] - [0084]; claims 1-6 * | 4,11,13 | C25B11/061 C25B11/067 C25B11/077 |
| X | US 2011/114254 A1 (XU WU [US] ET AL) 19 May 2011 (2011-05-19) | 1-3,5, 7-16 | C25B11/095 H01M4/04 |
| Y | * paragraph [0063] - paragraph [0087]; | 9,10 | H01M4/62 |
| A | claims 1-28; figures 1, 4A * | 4,6 | H01M4/86 H01M4/88 |
| X | EP 2 736 110 A1 (DAINIPPON PRINTING CO LTD [JP]) 28 May 2014 (2014-05-28) * paragraphs [0034] - [0042]; examples 1-3 * | 1,12 | C25B1/04 |

**TECHNICAL FIELDS SEARCHED (IPC)**

C25B
H01M

The present search report has been drawn up for all claims

| Place of search | Date of completion of the search | Examiner |
|---|---|---|
| Munich | 6 June 2024 | Teppo, Kirsi-Marja |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 4 549 625 A1**

## ANNEX TO THE EUROPEAN SEARCH REPORT
## ON EUROPEAN PATENT APPLICATION NO.

EP 23 20 7017

06-06-2024

| Patent document cited in search report | | Publication date | Patent family member(s) | | Publication date |
|---|---|---|---|---|---|
| EP 2355212 | A1 | 10-08-2011 | CN | 102203987 A | 28-09-2011 |
| | | | EP | 2355212 A1 | 10-08-2011 |
| | | | JP | 4546574 B1 | 15-09-2010 |
| | | | JP | 2011029132 A | 10-02-2011 |
| | | | US | 2011206990 A1 | 25-08-2011 |
| | | | WO | 2010050347 A1 | 06-05-2010 |
| US 2011114254 | A1 | 19-05-2011 | US | 2011114254 A1 | 19-05-2011 |
| | | | WO | 2011062998 A2 | 26-05-2011 |
| EP 2736110 | A1 | 28-05-2014 | CN | 103765647 A | 30-04-2014 |
| | | | EP | 2736110 A1 | 28-05-2014 |
| | | | JP | 4962640 B1 | 27-06-2012 |
| | | | JP | 2013026085 A | 04-02-2013 |
| | | | US | 2014170532 A1 | 19-06-2014 |
| | | | WO | 2013015115 A1 | 31-01-2013 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 006410160 B1

- US 4116804 A